# EUROPEAN PATENT APPLICATION

(11) **EP 4 496 256 A1**
(43) Date of publication of application: **22.01.2025**
(21) Application number: 23810911.0
(22) Date of filing: 17.05.2023
(51) Int. Cl.: H04L 5/00, H04B 7/0413

(54) **CHANNEL INFORMATION FEEDBACK METHOD, ELECTRONIC DEVICE, AND COMPUTER-READABLE MEDIUM**

(30) Priority: 27.05.2022 CN 202210587090
(71) Applicant: ZTE Corporation, Shenzhen, Guangdong 518057 (CN)
(72) Inventor: YE, Xinquan, Shenzhen, Guangdong 518057 (CN); CHEN, Yijian, Shenzhen, Guangdong 518057 (CN); YU, Guanghui, Shenzhen, Guangdong 518057 (CN); LU, Zhaohua, Shenzhen, Guangdong 518057 (CN)
(74) Representative: Canzler & Bergmeier Patentanwälte Partnerschaft mbB
(86) International application number: PCT/CN2023/094652
(87) International publication number: WO 2023/226838

(57) **Abstract**

The present disclosure provides a channel information feedback method. The method comprises: determining antenna set configuration information, the antenna set configuration information representing the configuration of an antenna set formed by minimum antenna unit sub-modules; determining a feedback codebook according to the antenna set configuration information; and performing channel information feedback by using the feedback codebook. The present disclosure further provides an electronic device and a computer-readable medium.

## Description

### TECHNICAL FIELD

The present disclosure relates to the technical field of channel information feedback, and in particular, to a channel information feedback method, an electronic device, and a computer-readable medium.

### BACKGROUND

As potential key technical points in the multi-antenna of direction in the Beyond-5th generation mobile communication technology/6th generation mobile communication technology (B5G/6G), Distributed Multiple-Input Multiple-Output (Distributed MIMO) and Cell-Free Massive Multiple-Input Multiple-Output (CF-mMIMO) receive more and more attention. One significant feature of those technologies is that, in a given area, spatial distribution of Access Points (APs) is sparser than that of centralized APs used by the existing New Radio (NR) technology, the APs are in a relatively large number, and a plurality of APs simultaneously serve a plurality of User Equipments (UEs).

With the related technology, requirements of channel information feedback cannot be met in many cases.

### SUMMARY

The present disclosure provides a channel information feedback method, an electronic device, and a computer-readable medium.

In a first aspect, an embodiment of the present disclosure provides a channel information feedback method, including: determining antenna set configuration information, where the antenna set configuration information represents a configuration situation of an antenna set formed by minimum antenna element sub-modules; determining a feedback codebook according to the antenna set configuration information; and performing channel information feedback using the feedback codebook.

In some embodiments, the antenna set configuration information includes at least one of: feature indication information of K basic antenna element sub-modules; position indication information of the K basic antenna element sub-modules; rotation indication information of the K basic antenna element sub-modules; or feature indication information of a reference antenna element module, where K is a positive integer, the basic antenna element sub-modules and the reference antenna element module are all formed by the minimum antenna element sub-modules, the reference antenna element module represents a maximum setting range of the minimum antenna element sub-modules, and the basic antenna element sub-module represents one or more minimum antenna element sub-modules that form a predetermined shape.

In some embodiments, the feature indication information of the basic antenna element sub-module includes at least one of: a shape of the basic antenna element sub-module; a number of oscillators of the basic antenna element sub-module; spatial distribution of the oscillators of the basic antenna element sub-module; a polarization direction of the oscillators of the basic antenna element sub-module; a reference point of the basic antenna element sub-module; minimum antenna element sub-module indexes of the basic antenna element sub-module; antenna port indexes of the basic antenna element sub-module; or an indexing mode of the basic antenna element sub-module, and the reference point of the basic antenna element sub-module is a position where a specified minimum antenna element sub-module in the basic antenna element sub-module is located.

In some embodiments, the position indication information of the basic antenna element sub-module includes a minimum antenna element sub-module index of a position where a reference point of the basic antenna element sub-module is located in the reference antenna element module, the reference point of the basic antenna element sub-module is a position where a specified minimum antenna element sub-module in the basic antenna element sub-module is located, and the rotation indication information of the basic antenna element sub-module includes an angle of rotation of the basic antenna element sub-module around the reference point of the basic antenna element sub-module.

In some embodiments, the feature indication information of the reference antenna element module includes at least one of: a shape of the reference antenna element module; a number of oscillators of the reference antenna element module; spatial distribution of the oscillators of the reference antenna element module; a polarization direction of the oscillators of the reference antenna element module; a reference point of the reference antenna element module; minimum antenna element sub-module indexes of the reference antenna element module; antenna port indexes of the reference antenna element module; or an indexing mode of the reference antenna element module, and the reference point of the reference antenna element module is a position where a specified minimum antenna element sub-module in the reference antenna element module is located.

In some embodiments, if the feature indication information of any basic antenna element sub-module indicates that a shape of the basic antenna element sub-module is a uniform rectangular area array and/or that a number of the minimum antenna element sub-module included in the basic antenna element sub-module is 1, the basic antenna element sub-module has no rotation indication information.

In some embodiments, if the feature indication information of any basic antenna element sub-module indicates that a number of the minimum antenna element sub-module included in the basic antenna element sub-module is 1, the feature indication information of the basic antenna element sub-module does not includes the reference point.

In some embodiments, the antenna set configuration information further includes: grouping information of n basic antenna element sub-module groups, where the grouping information of the basic antenna element sub-module groups represents the basic antenna element sub-modules included in the basic antenna element sub-module groups, each of the basic antenna element sub-module groups includes a plurality of basic antenna element sub-modules having the same feature indication information, the n basic antenna element sub-module groups includes K0 basic antenna element sub-modules in total, and K0 ≤ K; and configuration information of the n basic antenna element sub-module groups, where the configuration information of the basic antenna element sub-module group includes at least one of: feature indication information of the basic antenna element sub-module group; position indication information of the basic antenna element sub-module group; or rotation indication information of the basic antenna element sub-module group.

In some embodiments, the feature indication information of the basic antenna element sub-module group includes the common feature indication information of all the basic antenna element sub-modules in the basic antenna element sub-module group, the position indication information of the basic antenna element sub-module group includes a minimum antenna element sub-module index of a position where a reference point of each basic antenna element sub-module of the basic antenna element sub-module group is located in the reference antenna element module, and the rotation indication information of the basic antenna element sub-module group includes an angle of rotation of each basic antenna element sub-module in the basic antenna element sub-module group around the reference point of the basic antenna element sub-module.

In some embodiments, if the feature indication information of any basic antenna element sub-module group indicates that shapes of the basic antenna element sub-modules in the basic antenna element sub-module group are uniform rectangular area arrays and/or that a number of the minimum antenna element sub-module included in each basic antenna element sub-module of the basic antenna element sub-module group is 1, the basic antenna element sub-module group has no rotation indication information.

In some embodiments, if the feature indication information of any basic antenna element sub-module group indicates that a number of the minimum antenna element sub-module included in each basic antenna element sub-module of the basic antenna element sub-module group is 1, the feature indication information of the basic antenna element sub-module group does not include the reference point.

In some embodiments, determining the feedback codebook according to the antenna set configuration information includes: determining an effective row index or an ineffective row index of a reference codebook, where the reference codebook is a codebook associated with the reference antenna element module; and determining the feedback codebook according to the effective row index or the ineffective row index of the reference codebook and the reference codebook, and determining the effective row index or the ineffective row index of the reference codebook includes any one of: determining the effective row index of the reference codebook according to the antenna set configuration information and index identification information; determining the ineffective row index of the reference codebook according to the antenna set configuration information and the index identification information; determining the effective row index of the reference codebook according to the antenna set configuration information, an index identification type, and the index identification information; and determining the ineffective row index of the reference codebook according to the antenna set configuration information, the index identification type, and the index identification information.

In some embodiments, each of the reference codebook and the feedback codebook is a P*Q complex matrix, where P is a number of antenna ports of the reference antenna element module, and Q is a number of transmission layers.

In some embodiments, the index identification information is all row indexes of the reference codebook, the index identification type includes an effective index identification type and an ineffective index identification type, and the index identification type is determined according to the antenna set configuration information or is notified by high-level signaling.

In some embodiments, determining the effective row index of the reference codebook according to the antenna set configuration information and the index identification information includes: determining an effective minimum antenna element sub-module index of the reference antenna element module; determining an effective antenna port index of the reference antenna element module according to the effective minimum antenna element sub-module index of the reference antenna element module, an indexing mode of the reference antenna element module, and the index identification information; and determining the effective row index of the reference codebook according to the effective antenna port index of the reference antenna element module, and determining the effective minimum antenna element sub-module index of the reference antenna element module includes any one of: determining the effective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, and the index identification information; determining the effective minimum antenna element sub-module index of the reference antenna element module according to the position indication information of the basic antenna element sub-modules, the feature indication information of the basic antenna element sub-modules, the feature indication information of the reference antenna element module, and the index identification information; determining the effective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, and the index identification information; and determining the effective minimum antenna element sub-module index of the reference antenna element module according to the position indication information of the basic antenna element sub-module groups, the feature indication information of the basic antenna element sub-module groups, the feature indication information of the reference antenna element module, and the index identification information.

In some embodiments, determining the ineffective row index of the reference codebook according to the antenna set configuration information and the index identification information includes: determining an ineffective minimum antenna element sub-module index of the reference antenna element module; determining an ineffective antenna port index of the reference antenna element module according to the ineffective minimum antenna element sub-module index of the reference antenna element module, an indexing mode of the reference antenna element module, and the index identification information; and determining the ineffective row index of the reference codebook according to the ineffective antenna port index of the reference antenna element module, and determining the ineffective minimum antenna element sub-module index of the reference antenna element module includes any one of: determining the ineffective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, and the index identification information; determining the ineffective minimum antenna element sub-module index of the reference antenna element module according to the position indication information of the basic antenna element sub-modules, the feature indication information of the basic antenna element sub-modules, the feature indication information of the reference antenna element module, and the index identification information; determining the ineffective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, and the index identification information; and determining the ineffective minimum antenna element sub-module index of the reference antenna element module according to the position indication information of the basic antenna element sub-module groups, the feature indication information of the basic antenna element sub-module groups, the feature indication information of the reference antenna element module, and the index identification information.

In some embodiments, determining the effective row index of the reference codebook according to the antenna set configuration information, the index identification type, and the index identification information includes: determining an effective minimum antenna element sub-module index of the reference antenna element module; determining an effective antenna port index of the reference antenna element module according to the effective minimum antenna element sub-module index of the reference antenna element module, an indexing mode of the reference antenna element module, and the index identification information; and determining the effective row index of the reference codebook according to the effective antenna port index of the reference antenna element module, and determining the effective minimum antenna element sub-module index of the reference antenna element module includes any one of: determining the effective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, the index identification information, and an effective index identification type; determining the effective minimum antenna element sub-module index of the reference antenna element module according to the position indication information of the basic antenna element sub-modules, the feature indication information of the basic antenna element sub-modules, the feature indication information of the reference antenna element module, the index identification information, and the effective index identification type; determining the effective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, the index identification information, and the effective index identification type; and determining the effective minimum antenna element sub-module index of the reference antenna element module according to the position indication information of the basic antenna element sub-module groups, the feature indication information of the basic antenna element sub-module groups, the feature indication information of the reference antenna element module, the index identification information, and the effective index identification type.

In some embodiments, determining the ineffective row index of the reference codebook according to the antenna set configuration information, the index identification type, and the index identification information includes: determining an ineffective minimum antenna element sub-module index of the reference antenna element module; determining an ineffective antenna port index of the reference antenna element module according to the ineffective minimum antenna element sub-module index of the reference antenna element module, an indexing mode of the reference antenna element module, and the index identification information; and determining the ineffective row index of the reference codebook according to the ineffective antenna port index of the reference antenna element module, and determining the ineffective minimum antenna element sub-module index of the reference antenna element module includes any one of: determining the ineffective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, the index identification information, and an ineffective index identification type; determining the ineffective minimum antenna element sub-module index of the reference antenna element module according to the position indication information of the basic antenna element sub-modules, the feature indication information of the basic antenna element sub-modules, the feature indication information of the reference antenna element module, the index identification information, and the ineffective index identification type; determining the ineffective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, the index identification information, and the ineffective index identification type; and determining the ineffective minimum antenna element sub-module index of the reference antenna element module according to the position indication information of the basic antenna element sub-module groups, the feature indication information of the basic antenna element sub-module groups, the feature indication information of the reference antenna element module, the index identification information, and the ineffective index identification type.

In some embodiments, determining the feedback codebook according to the effective row index of the reference codebook and the reference codebook includes: determining the ineffective row index of the reference codebook according to the effective row index of the reference codebook and the index identification information; and according to the determined ineffective row index of the reference codebook and the reference codebook, setting a row in a reference codebook matrix which is corresponding to the ineffective row index of the reference codebook to zero to obtain the feedback codebook.

In some embodiments, determining the feedback codebook according to the ineffective row index of the reference codebook and the reference codebook includes: according to the ineffective row index of the reference codebook and the reference codebook, setting a row in a reference codebook matrix which is corresponding to the ineffective row index of the reference codebook to zero to obtain the feedback codebook.

In some embodiments, the method is performed by any one of an Access Point (AP), a User Equipment (UE), a Central Processing Unit (CPU), and a Mobile Edge Computing (MEC) unit.

In a second aspect, the present disclosure provides an electronic device, including one or more storage devices and one or more processors, the one or more storage devices store a computer program executable by the one or more processors, and when the computer program is executed by the one or more processors, the channel information feedback method according to any one of the embodiments of the present disclosure is implemented.

In a third aspect, the present disclosure provides a computer-readable medium having stored thereon a computer program which, when executed by a processor, implements the channel information feedback method according to any one of the embodiments of the present disclosure is implemented.

In the embodiments of the present disclosure, the feedback codebook for channel information feedback is obtained according to the antenna set configuration information related to a status of an antenna element module, so that the feedback codebook can better adapt to a current status of the antenna element module. Thus, channel information can be fed back more effectively according to the feedback codebook, thereby improving communication quality.

### BRIEF DESCRIPTION OF DRAWINGS

In the drawings for the embodiments of the present disclosure:
FIG. 1 is a flowchart illustrating a channel information feedback method according to an embodiment of the present disclosure;
FIG. 2 is another flowchart illustrating a channel information feedback method according to an embodiment of the present disclosure;
FIG. 3 is a schematic structural diagram of a minimum antenna element sub-module in a channel information feedback method according to an embodiment of the present disclosure;
FIG. 4 is a schematic structural diagram of a basic antenna element sub-module in a channel information feedback method according to an embodiment of the present disclosure;
FIG. 5 is another schematic structural diagram of a basic antenna element sub-module in a channel information feedback method according to an embodiment of the present disclosure;
FIG. 6 is still another schematic structural diagram of a basic antenna element sub-module in a channel information feedback method according to an embodiment of the present disclosure;
FIG. 7 is yet another schematic structural diagram of a basic antenna element sub-module in a channel information feedback method according to an embodiment of the present disclosure;
FIG. 8 is yet another schematic structural diagram of a basic antenna element sub-module in a channel information feedback method according to an embodiment of the present disclosure;
FIG. 9 is yet another schematic structural diagram of a basic antenna element sub-module in a channel information feedback method according to an embodiment of the present disclosure;
FIG. 10 is yet another schematic structural diagram of a basic antenna element sub-module in a channel information feedback method according to an embodiment of the present disclosure;
FIG. 11 is a schematic structural diagram of a reference antenna element module in a shape of a uniform rectangular area array;
FIG. 12 is a schematic structural diagram of a reference antenna element module in a shape of a uniform circular linear array;
FIG. 13 is a schematic diagram illustrating antenna set configuration information in a channel information feedback method according to an embodiment of the present disclosure;
FIG. 14 is a schematic diagram illustrating antenna set configuration information in a channel information feedback method according to an embodiment of the present disclosure;
FIG. 15 is a schematic diagram illustrating antenna set configuration information in a channel information feedback method according to an embodiment of the present disclosure;
FIG. 16 is a schematic diagram illustrating antenna set configuration information in a channel information feedback method according to an embodiment of the present disclosure;
FIG. 17 is a block diagram of an electronic device according to an embodiment of the present disclosure; and
FIG. 18 is a block diagram of a computer-readable medium according to an embodiment of the present disclosure.

### DETAIL DESCRIPTION OF EMBODIMENTS

In order to enable those of ordinary skill in the art to better understand the technical solutions of the present disclosure, a channel information feedback method, an electronic device, and a computer-readable medium provided by the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described herein. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with the specific embodiments of the present disclosure, the drawings are used to explain the present disclosure, but do not constitute any limitation to the present disclosure. The above and other features and advantages will become more apparent to those of ordinary skill in the art from the description of the specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe specific embodiments, and are not intended to limit the present disclosure. The term "and/or" used herein includes one associated listed item or any and all combinations of more than one associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The present disclosure is not limited to those embodiments illustrated by the drawings, but includes modifications to configuration formed based on a manufacturing process. Thus, regions shown in the drawings are illustrative, and shapes of the regions shown in the drawings illustrate specific shapes of regions of elements, but are not intended to make limitations.

In potential application scenarios of the CF-mMIMO in the future, such as large gymnasiums, shopping malls, airports, and automatic factories, spatial distribution of UEs is very complex, and there may be cases where the UEs in some areas are distributed densely and are in a larger number, the UEs in some areas are distributed sparsely and are in a smaller number, and the UEs in some areas have moderate density and are in a moderate number, so that requirements of services for different spatial positions are different, which further desires flexible deployment of the APs to meet the different requirements. For example, when an AP needs to be deployed in a corner of a building or on a surface of an object, an antenna element module in a shape of a uniform rectangular area array cannot be mounted well due to space limitation, in which case an irregular-shaped specific antenna element module may be placed at a corresponding position. After the specific antenna element module is deployed, on the one hand, a better beam coverage effect can be produced due to a shorter distance between the AP and the UEs and more flexible orientation of the antenna module; and on the other hand, a communication speed can be further increased and a communication delay can be significantly reduced due to improved signal quality. In addition, the shape of the specific antenna element module has various possibilities, and the specific antenna element module has good expandability, so that the specific antenna element module can be flexibly deployed in different application scenarios.

As can be seen, the uniform rectangular area array antenna element module does not have the above characteristics of the specific antenna element module. Therefore, the corresponding contents are not defined in NR standards in the related technology, and a codebook adapted to the above characteristics cannot be generated and channel information feedback cannot be performed accordingly.

In a first aspect, an embodiment of the present disclosure provides a channel information feedback method.

The method provided in the embodiments of the present disclosure is used for communication equipment to feed information of a corresponding communication channel back to an opposite end, and specifically includes determining a feedback codebook for channel information feedback according to a current situation (an actual configuration situation of an antenna element module of the communication equipment), and then feeding back the information of the channel based on the feedback codebook.

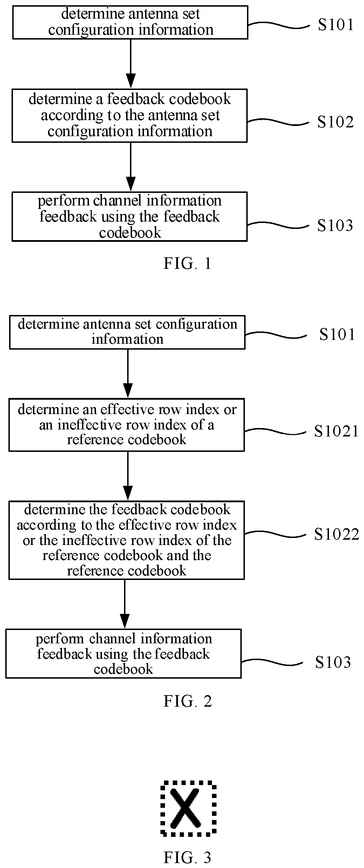

Referring to FIG. 1, the channel information feedback method according to an embodiment of the present disclosure includes the following operations S101 to S103.

At S101, antenna set configuration information is determined.

The antenna set configuration information represents a configuration situation of an antenna set formed by minimum antenna element sub-modules.

At S102, a feedback codebook is determined according to the antenna set configuration information.

At S103, channel information feedback is performed using the feedback codebook.

The minimum antenna element sub-module is the minimum antenna element in an antenna element module, and each minimum antenna element sub-module may be formed by one antenna oscillator or a plurality of different antenna oscillators.

In the embodiments of the present disclosure, the configuration situation (the antenna set configuration information) of the antenna set (such as the antenna element module) in the communication equipment is determined, and then the corresponding feedback codebook is obtained according to the antenna set configuration information, and the feedback codebook is dedicated to channel information feedback, so that channel information feedback may be performed according to the feedback codebook.

In the embodiments of the present disclosure, the feedback codebook for channel information feedback is obtained according to the antenna set configuration information related to a status of the antenna element module, so that the feedback codebook can better adapt to a current status of the antenna element module. Thus, channel information can be fed back more effectively according to the feedback codebook, thereby improving communication quality.

In some embodiments, the method is performed by any one of an AP, a UE, a CPU, and a MEC unit.

In an implementation of the embodiments of the present disclosure, the method provided in the embodiments of the present disclosure may be performed by an AP, a UE, a CPU, or an MEC unit.

In some embodiments, the antenna set configuration information includes at least one of: feature indication information of K basic antenna element sub-modules; position indication information of the K basic antenna element sub-modules; rotation indication information of the K basic antenna element sub-modules; or feature indication information of a reference antenna element module.

K is a positive integer, the basic antenna element sub-modules and the reference antenna element module are all formed by the minimum antenna element sub-modules, the reference antenna element module represents a maximum setting range of the minimum antenna element sub-modules, and the basic antenna element sub-module represents one or more minimum antenna element sub-modules that form a predetermined shape.

The antenna set configuration information includes the information of the "basic antenna element sub-modules" in the antenna element module, each basic antenna element sub-module may include one or more minimum antenna element sub-modules (see FIG. 3), and the information of each basic antenna element sub-module includes the feature indication information, the position indication information, and the rotation indication information of the basic antenna element sub-module.

The antenna set configuration information may also include the feature indication information of the reference antenna element module, and the reference antenna element module is an antenna element module representing a range (e.g., a maximum range) where the basic antenna element sub-modules are allowed to be set, that is, the basic antenna element sub-modules may be set at different positions in the reference antenna element module.

It should be understood that the antenna set configuration information including information of the reference antenna element module does not mean that a minimum antenna element sub-module is necessarily and actually set at each corresponding position in the antenna element module.

Thus, according to the antenna set configuration information mentioned above, it may be determined at which positions within the range of the reference antenna element module the basic antenna element sub-modules are set, that is, the minimum antenna element sub-modules are set at the corresponding positions (so no minimum antenna element sub-modules are set at the other positions) or no minimum antenna element sub-modules are set at the corresponding positions (so the minimum antenna element sub-modules are set at the other positions), thus obtaining the actual configuration situation of the antenna set.

In some embodiments, the feature indication information of the basic antenna element sub-module includes at least one of: a shape of the basic antenna element sub-module; a number of oscillators of the basic antenna element sub-module; spatial distribution of the oscillators of the basic antenna element sub-module; a polarization direction of the oscillators of the basic antenna element sub-module; a reference point of the basic antenna element sub-module; minimum antenna element sub-module indexes of the basic antenna element sub-module; antenna port indexes of the basic antenna element sub-module; or an indexing mode of the basic antenna element sub-module.

The reference point of the basic antenna element sub-module is a position where a specified minimum antenna element sub-module in the basic antenna element sub-module is located.

In an implementation of the embodiments of the present disclosure, the feature indication information of the basic antenna element sub-module may include the shape, a situation of the oscillators, the reference point, and an indexing situation of the basic antenna element sub-module.

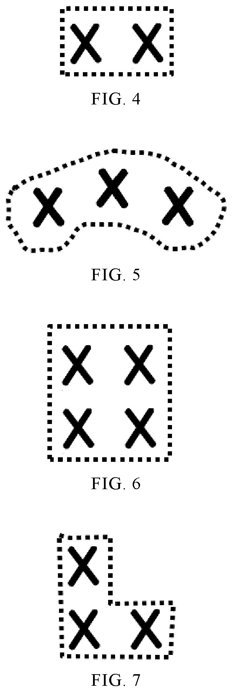

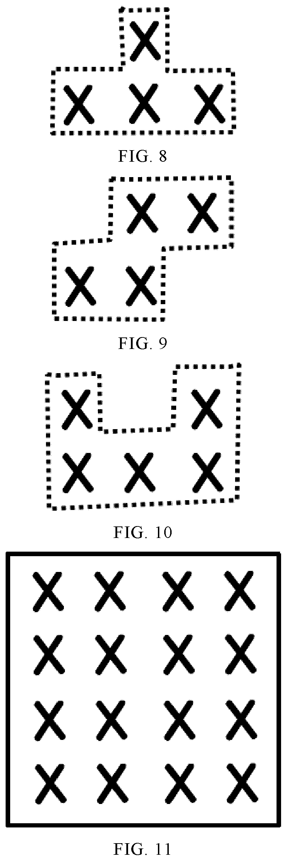

Referring to FIG. 4 to FIG. 10, the shape of the basic antenna element sub-module refers to a shape formed by the minimum antenna element sub-modules included in the basic antenna element sub-module, and includes, but is not limited to, a uniform linear array (FIG. 4), a uniform arcuate array (FIG. 5), a uniform rectangular area array (FIG. 6), an "L" shape (FIG. 7), a "T" shape (FIG. 8), an "S" shape (FIG. 9), and a shape of the character of " 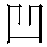 " (FIG. 10).

The reference point of the basic antenna element sub-module is the position of one specified minimum antenna element sub-module in the basic antenna element sub-module, that is, a position of the whole basic antenna element sub-module may be determined according to the position of the specified minimum antenna element sub-module.

In some embodiments, the position indication information of the basic antenna element sub-module includes a minimum antenna element sub-module index of a position where a reference point of the basic antenna element sub-module is located in the reference antenna element module, and the reference point of the basic antenna element sub-module is a position where a specified minimum antenna element sub-module in the basic antenna element sub-module is located.

The rotation indication information of the basic antenna element sub-module includes an angle of rotation of the basic antenna element sub-module around the reference point of the basic antenna element sub-module.

In an implementation of the embodiments of the present disclosure, the position indication information of the basic antenna element sub-module is configured to define the position of the basic antenna element sub-module. Specifically, the reference point of the basic antenna element sub-module needs to be located at a minimum antenna element sub-module in the reference antenna element module, and an index of the minimum antenna element sub-module can represent the position of the basic antenna element sub-module, so that the index may be used as the position indication information.

The rotation indication information of the basic antenna element sub-module is configured to indicate the angle of the rotation of the basic antenna element sub-module around the reference point of the basic antenna element sub-module.

In some embodiments, the feature indication information of the reference antenna element module includes at least one of: a shape of the reference antenna element module; a number of oscillators of the reference antenna element module; spatial distribution of the oscillators of the reference antenna element module; a polarization direction of the oscillators of the reference antenna element module; a reference point of the reference antenna element module; minimum antenna element sub-module indexes of the reference antenna element module; antenna port indexes of the reference antenna element module; or an indexing mode of the reference antenna element module.

The reference point of the reference antenna element module is a position where a specified minimum antenna element sub-module in the reference antenna element module is located.

The feature indication information of the reference antenna element module may also include the shape, a situation of the oscillators, the reference point, and an indexing situation of the reference antenna element module.

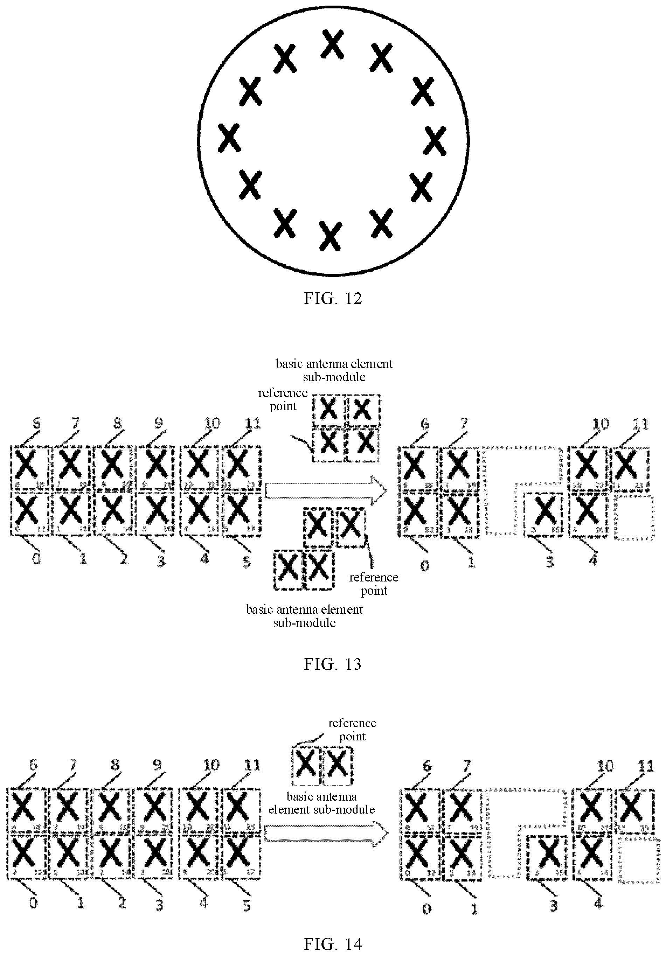

Illustratively, referring to FIG. 11 and FIG. 12, the shape of the reference antenna element module includes, but is not limited to, a uniform rectangular area array (FIG. 11) and a uniform circular linear array (FIG. 12).

In some embodiments, if the feature indication information of any basic antenna element sub-module indicates that a shape of the basic antenna element sub-module is a uniform rectangular area array and/or that a number of the minimum antenna element sub-module included in the basic antenna element sub-module is 1, the basic antenna element sub-module has no rotation indication information.

In an implementation of the embodiments of the present disclosure, in a case where the basic antenna element sub-module is the uniform rectangular area array or includes merely one minimum antenna element sub-module, it actually makes no difference whether the basic antenna element sub-module rotates or not. Therefore, the corresponding rotation indication information may be defaulted and not configured in practical applications.

In some embodiments, if the feature indication information of any basic antenna element sub-module indicates that a number of the minimum antenna element sub-module included in the basic antenna element sub-module is 1, the feature indication information of the basic antenna element sub-module does not include the reference point.

In an implementation of the embodiments of the present disclosure, in a case where the basic antenna element sub-module includes merely one minimum antenna element sub-module, the minimum antenna element sub-module is necessarily the reference point of the basic antenna element sub-module. Therefore, the information about the reference point of the basic antenna element sub-module may be defaulted and not configured in practical applications.

In some embodiments, the antenna set configuration information further includes: grouping information of n basic antenna element sub-module groups, where the grouping information of the basic antenna element sub-module groups represents the basic antenna element sub-modules included in the basic antenna element sub-module groups, each of the basic antenna element sub-module groups includes a plurality of basic antenna element sub-modules having the same feature indication information, the n basic antenna element sub-module groups includes K0 basic antenna element sub-modules in total, and K0 ≤ K; and configuration information of the n basic antenna element sub-module groups, where the configuration information of the basic antenna element sub-module group includes at least one of: feature indication information of the basic antenna element sub-module group; position indication information of the basic antenna element sub-module group; or rotation indication information of the basic antenna element sub-module group.

In an implementation of the embodiments of the present disclosure, a plurality of basic antenna element sub-modules having the same feature indication information may form one "group (basic antenna element sub-module group)", so that the antenna set configuration information may further include the corresponding grouping information, and the feature indication information, the position indication information, and the rotation indication information of the basic antenna element sub-module groups.

The number (K0) of the basic antenna element sub-modules included in all the basic antenna element sub-module groups is less than or equal to the total number (K) of the basic antenna element sub-modules, and there may be no basic antenna element sub-module groups.

Therefore, in the embodiments of the present disclosure, all the basic antenna element sub-modules may be included in the basic antenna element sub-module groups; or part of the basic antenna element sub-modules are included in the basic antenna element sub-module groups, and the remaining part of the basic antenna element sub-modules are independent; or there are no basic antenna element sub-module groups, and each of the basic antenna element sub-modules is independent.

In some embodiments, the feature indication information of the basic antenna element sub-module group includes the common feature indication information of all the basic antenna element sub-modules in the basic antenna element sub-module group.

The position indication information of the basic antenna element sub-module group includes a minimum antenna element sub-module index of a position where a reference point of each basic antenna element sub-module of the basic antenna element sub-module group is located in the reference antenna element module.

The rotation indication information of the basic antenna element sub-module group includes an angle of rotation of each basic antenna element sub-module in the basic antenna element sub-module group around the reference point of the basic antenna element sub-module.

In an implementation of the embodiments of the present disclosure, the feature indication information of the basic antenna element sub-module group is the common feature indication information of all the basic antenna element sub-modules in the basic antenna element sub-module group, the position indication information of the basic antenna element sub-module group indicates a position situation of each basic antenna element sub-module in the basic antenna element sub-module group, and the rotation indication information of the basic antenna element sub-module group indicates a rotation situation of each basic antenna element sub-module in the basic antenna element sub-module group.

In some embodiments, if the feature indication information of any basic antenna element sub-module group indicates that shapes of the basic antenna element sub-modules in the basic antenna element sub-module group are uniform rectangular area arrays and/or that a number of the minimum antenna element sub-module included in each basic antenna element sub-module of the basic antenna element sub-module group is 1, the basic antenna element sub-module group has no rotation indication information.

In some embodiments, if the feature indication information of any basic antenna element sub-module group indicates that a number of the minimum antenna element sub-module included in each basic antenna element sub-module of the basic antenna element sub-module group is 1, the feature indication information of the basic antenna element sub-module group does not include the reference point.

In an implementation of the embodiments of the present disclosure, similar to what is stated above, in a case where each basic antenna element sub-module in the basic antenna element sub-module group is the uniform rectangular area array or includes merely one minimum antenna element sub-module, it actually makes no difference whether the basic antenna element sub-module rotates or not. Therefore, the rotation indication information corresponding to the basic antenna element sub-module group may be defaulted and not configured in practical applications.

Similarly, in a case where each basic antenna element sub-module in the basic antenna element sub-module group includes merely one minimum antenna element sub-module, the information about the reference points of the basic antenna element sub-module group may be defaulted and not configured in practical applications.

In some embodiments, referring to FIG. 2, determining the feedback codebook according to the antenna set configuration information (S102) includes the following operations S1021 and S1022.

At S1021, an effective row index or an ineffective row index of a reference codebook is determined.

The reference codebook is a codebook associated with the reference antenna element module.

At S1022, the feedback codebook is determined according to the effective row index or the ineffective row index of the reference codebook and the reference codebook.

In an implementation of the embodiments of the present disclosure, with the codebook associated with the reference antenna element module used as the reference codebook, the effective row index or the ineffective row index in the reference codebook is first determined according to the antenna set configuration information, and then the reference codebook is processed (such as setting an ineffective row to zero) according to the effective row index or the ineffective row index, so as to obtain the feedback codebook.

Determining the effective row index or the ineffective row index of the reference codebook (S1021) includes any one of: S10211, determining the effective row index of the reference codebook according to the antenna set configuration information and index identification information; S10212, determining the ineffective row index of the reference codebook according to the antenna set configuration information and the index identification information; S10213, determining the effective row index of the reference codebook according to the antenna set configuration information, an index identification type, and the index identification information; and S10214, determining the ineffective row index of the reference codebook according to the antenna set configuration information, the index identification type, and the index identification information.

Specifically, the effective row index or the ineffective row index of the reference codebook may be determined according to the antenna set configuration information and the index identification information, or the effective row index or the ineffective row index of the reference codebook may be determined according to the antenna set configuration information, the index identification type, and the index identification information.

In some embodiments, each of the reference codebook and the feedback codebook is a P*Q complex matrix, where P is a number of antenna ports of the reference antenna element module, and Q is a number of transmission layers.

In an implementation of the embodiments of the present disclosure, the reference codebook and the feedback codebook are complex matrices of the same size (P*Q).

P and Q are both positive integers, and single-layer transmission is performed when Q=1, and multi-layer transmission is performed when Q > 1.

In some embodiments, the index identification information is all row indexes of the reference codebook, the index identification type includes an effective index identification type and an ineffective index identification type, and the index identification type is determined according to the antenna set configuration information or is notified by high-level signaling.

In an implementation of the embodiments of the present disclosure, the index identification information is corresponding to all rows of the reference codebook, and the index identification type represents whether a corresponding row is effective or ineffective.

The index identifier type of each row may be set in the antenna set configuration information, or may be determined by a high-level signaling notification.

In some embodiments, determining the effective row index of the reference codebook according to the antenna set configuration information and the index identification information (S10211) includes: determining an effective minimum antenna element sub-module index of the reference antenna element module; determining an effective antenna port index of the reference antenna element module according to the effective minimum antenna element sub-module index of the reference antenna element module, an indexing mode of the reference antenna element module, and the index identification information; and determining the effective row index of the reference codebook according to the effective antenna port index of the reference antenna element module.

Determining the effective minimum antenna element sub-module index of the reference antenna element module includes any one of: determining the effective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, and the index identification information; determining the effective minimum antenna element sub-module index of the reference antenna element module according to the position indication information of the basic antenna element sub-modules, the feature indication information of the basic antenna element sub-modules, the feature indication information of the reference antenna element module, and the index identification information; determining the effective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, and the index identification information; and determining the effective minimum antenna element sub-module index of the reference antenna element module according to the position indication information of the basic antenna element sub-module groups, the feature indication information of the basic antenna element sub-module groups, the feature indication information of the reference antenna element module, and the index identification information.

In an implementation of the embodiments of the present disclosure, the effective minimum antenna element sub-module index of the reference antenna element module may be determined first, then the effective antenna port index of the reference antenna element module may be determined according to the effective minimum antenna element sub-module index of the reference antenna element module, the indexing mode of the reference antenna element module, and the index identification information, and finally the effective row index of the reference codebook may be determined.

The effective minimum antenna element sub-module index of the reference antenna element module may be determined according to the relevant information of the basic antenna element sub-modules and/or the basic antenna element sub-module groups, and the relevant information of the indexes.

The "effective minimum antenna element sub-module index of the reference antenna element module" represents at which position where a minimum antenna element sub-module in the reference antenna element module is located is effective. Specifically, according to various information (which may further include the effective index identification type) of the basic antenna element sub-modules (or the basic antenna element sub-module groups), it is determined in which forms the K basic antenna element sub-modules need to be respectively located at which positions of the reference antenna element module, and those positions are actually provided with the minimum antenna element sub-modules (effective).

Correspondingly, the "ineffective minimum antenna element sub-module index of the reference antenna element module" below represents at which position where a minimum antenna element sub-module in the reference antenna element module is located is ineffective. Specifically, according to various information (which may further include the ineffective index identification type) of the basic antenna element sub-modules (or the basic antenna element sub-module groups), it is determined in which forms the K basic antenna element sub-modules need to be respectively located at which positions of the reference antenna element module, and the minimum antenna element sub-modules at the corresponding positions are "removed (made ineffective)", so that the remaining positions are actually provided with the minimum antenna element sub-modules (effective).

The "effective row index of the reference codebook" refers to that a row corresponding thereto in the reference codebook is effective (apparently, the other rows are ineffective).

Correspondingly, the "ineffective row index of the reference codebook" below refers to that a row corresponding thereto in the reference codebook is ineffective.

In some embodiments, determining the ineffective row index of the reference codebook according to the antenna set configuration information and the index identification information (S 10212) includes: determining an ineffective minimum antenna element sub-module index of the reference antenna element module; determining an ineffective antenna port index of the reference antenna element module according to the ineffective minimum antenna element sub-module index of the reference antenna element module, an indexing mode of the reference antenna element module, and the index identification information; and determining the ineffective row index of the reference codebook according to the ineffective antenna port index of the reference antenna element module.

Determining the ineffective minimum antenna element sub-module index of the reference antenna element module includes any one of: determining the ineffective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, and the index identification information; determining the ineffective minimum antenna element sub-module index of the reference antenna element module according to the position indication information of the basic antenna element sub-modules, the feature indication information of the basic antenna element sub-modules, the feature indication information of the reference antenna element module, and the index identification information; determining the ineffective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, and the index identification information; and determining the ineffective minimum antenna element sub-module index of the reference antenna element module according to the position indication information of the basic antenna element sub-module groups, the feature indication information of the basic antenna element sub-module groups, the feature indication information of the reference antenna element module, and the index identification information.

In another implementation of the embodiments of the present disclosure, the ineffective minimum antenna element sub-module index of the reference antenna element module may be determined first, then the ineffective antenna port index of the reference antenna element module may be determined according to the ineffective minimum antenna element sub-module index of the reference antenna element module, the indexing mode of the reference antenna element module, and the index identification information, and finally the ineffective row index of the reference codebook may be determined.

The ineffective minimum antenna element sub-module index of the reference antenna element module may be determined according to the relevant information of the basic antenna element sub-modules and/or the basic antenna element sub-module groups, and the relevant information of the indexes.

In some embodiments, determining the effective row index of the reference codebook according to the antenna set configuration information, the index identification type, and the index identification information (S 10213) includes: determining an effective minimum antenna element sub-module index of the reference antenna element module; determining an effective antenna port index of the reference antenna element module according to the effective minimum antenna element sub-module index of the reference antenna element module, an indexing mode of the reference antenna element module, and the index identification information; and determining the effective row index of the reference codebook according to the effective antenna port index of the reference antenna element module.

Determining the effective minimum antenna element sub-module index of the reference antenna element module includes any one of: determining the effective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, the index identification information, and an effective index identification type; determining the effective minimum antenna element sub-module index of the reference antenna element module according to the position indication information of the basic antenna element sub-modules, the feature indication information of the basic antenna element sub-modules, the feature indication information of the reference antenna element module, the index identification information, and the effective index identification type; determining the effective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, the index identification information, and the effective index identification type; and determining the effective minimum antenna element sub-module index of the reference antenna element module according to the position indication information of the basic antenna element sub-module groups, the feature indication information of the basic antenna element sub-module groups, the feature indication information of the reference antenna element module, the index identification information, and the effective index identification type.

In another implementation of the embodiments of the present disclosure, the effective minimum antenna element sub-module index of the reference antenna element module may be determined first, then the effective antenna port index of the reference antenna element module may be determined according to the effective minimum antenna element sub-module index of the reference antenna element module, the indexing mode of the reference antenna element module, and the index identification information, and finally the effective row index of the reference codebook may be determined.

The effective minimum antenna element sub-module index of the reference antenna element module may be determined according to the relevant information of the basic antenna element sub-modules and/or the basic antenna element sub-module groups, and the relevant information of the indexes.

In some embodiments, determining the ineffective row index of the reference codebook according to the antenna set configuration information, the index identification type, and the index identification information (S10214) includes: determining an ineffective minimum antenna element sub-module index of the reference antenna element module; determining an ineffective antenna port index of the reference antenna element module according to the ineffective minimum antenna element sub-module index of the reference antenna element module, an indexing mode of the reference antenna element module, and the index identification information; and determining the ineffective row index of the reference codebook according to the ineffective antenna port index of the reference antenna element module.

Determining the ineffective minimum antenna element sub-module index of the reference antenna element module includes any one of: determining the ineffective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, the index identification information, and an ineffective index identification type; determining the ineffective minimum antenna element sub-module index of the reference antenna element module according to the position indication information of the basic antenna element sub-modules, the feature indication information of the basic antenna element sub-modules, the feature indication information of the reference antenna element module, the index identification information, and the ineffective index identification type; determining the ineffective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, the index identification information, and the ineffective index identification type; and determining the ineffective minimum antenna element sub-module index of the reference antenna element module according to the position indication information of the basic antenna element sub-module groups, the feature indication information of the basic antenna element sub-module groups, the feature indication information of the reference antenna element module, the index identification information, and the ineffective index identification type.

In another implementation of the embodiments of the present disclosure, the ineffective minimum antenna element sub-module index of the reference antenna element module may be determined first, then the ineffective antenna port index of the reference antenna element module may be determined according to the ineffective minimum antenna element sub-module index of the reference antenna element module, the indexing mode of the reference antenna element module, and the index identification information, and finally the ineffective row index of the reference codebook may be determined.

The ineffective minimum antenna element sub-module index of the reference antenna element module may be determined according to the relevant information of the basic antenna element sub-modules and/or the basic antenna element sub-module groups, and the relevant information of the indexes.

In some embodiments, determining the feedback codebook according to the effective row index of the reference codebook and the reference codebook includes: determining the ineffective row index of the reference codebook according to the effective row index of the reference codebook and the index identification information; and according to the determined ineffective row index of the reference codebook and the reference codebook, setting a row in a reference codebook matrix which is corresponding to the ineffective row index of the reference codebook to zero to obtain the feedback codebook.

In an implementation of the embodiments of the present disclosure, after the effective row index of the reference codebook is determined, the ineffective row index of the reference codebook may be determined accordingly, so that the row in the codebook matrix which is corresponding to the ineffective row index may be set to zero to obtain the feedback codebook.

In some embodiments, determining the feedback codebook according to the ineffective row index of the reference codebook and the reference codebook includes: according to the ineffective row index of the reference codebook and the reference codebook, setting a row in a reference codebook matrix which is corresponding to the ineffective row index of the reference codebook to zero to obtain the feedback codebook.

In another implementation of the embodiments of the present disclosure, when the ineffective row index of the reference codebook is determined, the row in the codebook matrix which is corresponding to the ineffective row index may be directly set to zero to obtain the feedback codebook.

Several specific examples of obtaining the feedback codebook according to the antenna set configuration information and performing channel information feedback are described below for illustration.

### Example One

FIG. 13 shows configuration of an antenna element module.

In FIG. 13, the numbers introduced by short oblique lines represent the minimum antenna element sub-module indexes, the lower two numbers in each dashed frame represent the antenna port indexes, on the left side of the arrow is the reference antenna element module, on the right side of the arrow is an actual antenna element module, and on the upper and lower sides of the arrow are the basic antenna element sub-modules (the basic antenna element sub-module group).

The meanings of the structures shown in FIG. 14 to FIG. 16 are the same as that of the structure shown in FIG. 13, and will not be described in detail.

The antenna set configuration information at least includes the position indication information {0, 11} of two basic antenna element sub-modules, the rotation indication information {0} of the S-shaped unit, the feature indication information {feature indication information of uniform rectangular area array unit, feature indication information of S-shaped unit} of the two basic antenna element sub-modules, and the feature indication information of the reference antenna element module.

As can be seen, since the shape of a uniform rectangular area array unit is a uniform rectangular area array, the rotation instruction information of the uniform rectangular area array unit is not configured.

The feature indication information of the uniform rectangular area array unit at least includes: the shape of the basic antenna element sub-module is the uniform rectangular area array; the number of the oscillators of the basic antenna element sub-module is 8; the spatial distribution of the oscillators of the basic antenna element sub-module is that, in a same polarization direction, the number of the oscillators in a horizontal direction is 2, the number of the oscillators in a vertical direction is 2, and the oscillators in the horizontal direction and the oscillators in the vertical direction are distributed at equal intervals; the polarization direction of the oscillators of the basic antenna element sub-module is dual polarization; the reference point of the basic antenna element sub-module is a position of a minimum antenna element sub-module at a lower left corner of the uniform rectangular area array unit; the minimum antenna element sub-module indexes of the basic antenna element sub-module are 0 to 3; the antenna port indexes of the basic antenna element sub-module are 0 to 7; and the indexing mode of the basic antenna element sub-module includes an association relationship between the minimum antenna element sub-module indexes of the basic antenna element sub-module and the antenna port indexes of the basic antenna element sub-module.

The feature indication information of the S-shaped unit at least includes: the shape of the basic antenna element sub-module is the S shape; the number of the oscillators of the basic antenna element sub-module is 8; the spatial distribution of the oscillators of the basic antenna element sub-module is that the oscillators in a same polarization direction are distributed in an S shape; the polarization direction of the oscillators of the basic antenna element sub-module is dual polarization; the reference point of the basic antenna element sub-module is a position of a minimum antenna element sub-module at an upper right corner of the S-shaped unit; the minimum antenna element sub-module indexes of the basic antenna element sub-module are 0 to 3; the antenna port indexes of the basic antenna element sub-module are 0 to 7; and the indexing mode of the basic antenna element sub-module includes an association relationship between the minimum antenna element sub-module indexes of the basic antenna element sub-module and the antenna port indexes of the basic antenna element sub-module.

The feature indication information of the reference antenna element module at least includes: the shape of the reference antenna element module is the uniform rectangular area array; the number of the oscillators of the reference antenna element module is 24; the spatial distribution of the oscillators of the reference antenna element module is that, in a same polarization direction, the number of the oscillators in a horizontal direction is 6, the number of the oscillators in a vertical direction is 2, and the oscillators in the horizontal direction and the oscillators in the vertical direction are distributed at equal intervals; the polarization direction of the oscillators of the reference antenna element module is dual polarization; the reference point of the reference antenna element module is a position of a minimum antenna element sub-module at a lower left corner of the uniform rectangular area array unit; the minimum antenna element sub-module indexes of the reference antenna element module are 0 to 11; the antenna port indexes of the reference antenna element module are 0 to 23; and the indexing mode of the reference antenna element module includes an association relationship f(i)=(i,i+12) between the minimum antenna element sub-module indexes of the reference antenna element module and the antenna port indexes of the reference antenna element module, where i is an integer from 0 to 11 and denotes a minimum antenna element sub-module index of the reference antenna element module, and f(i) denotes an antenna port index of the reference antenna element module.

The index identification type is determined as the effective index identification type according to the antenna set configuration information or the high-level signaling.

The reference codebook W0 is a 24*Q complex matrix, where Q is a positive integer, and single-layer transmission is performed when Q=1 , and multi-layer transmission is performed when Q > 1.

According to a type set of the basic antenna element sub-modules, the position indication information of the basic antenna element sub-modules, the rotation indication information of the basic antenna element sub-modules, the feature indication information of the basic antenna element sub-modules, the feature indication information of the reference antenna element module, and the effective index identification type, the effective minimum antenna element sub-module indexes of the reference antenna element module are determined to be {0, 1, 3, 4, 6, 7, 10, 11}.

According to the effective minimum antenna element sub-module indexes of the reference antenna element module and the indexing mode of the reference antenna element module, the effective antenna port indexes of the reference antenna element module are determined to be {0, 1, 3, 4, 6, 7, 10, 11, 12, 13, 15, 16, 18, 19, 22, 23}.

According to the effective antenna port indexes of the reference antenna element module, the effective row indexes of the reference codebook are determined to be {1, 2, 4, 5, 7, 8, 11, 12, 13, 14, 16, 17, 19, 20, 23, 24}.

According to the effective row indexes of the reference codebook and all the row indexes of the reference codebook, the ineffective row indexes of the reference codebook are determined to be {3, 6, 9, 10, 15, 18, 21, 22}.

The feedback codebook W1 is determined according to the reference codebook W0 and the ineffective row indexes of the reference codebook. Specifically, elements of the third, sixth, ninth, tenth, fifteenth, eighteenth, twenty-first and twenty-second rows of the reference codebook W0 are set to zero to obtain the feedback codebook W1.

Channel information feedback is performed using the feedback codebook W1.

### Example Two

FIG. 14 shows configuration of an antenna element module.

The antenna set configuration information at least includes the position indication information {0, 3, 6, 10} of four basic antenna element sub-modules, the feature indication information {feature indication information of uniform linear array unit, feature indication information of uniform linear array unit, feature indication information of uniform linear array unit, feature indication information of uniform linear array unit} of the four basic antenna element sub-modules, and the feature indication information of the reference antenna element module. The four basic antenna element sub-modules have the same feature indication information.

Or, in another implementation, the form of the basic antenna element sub-module group may be adopted, that is, the antenna set configuration information at least includes the position indication information {0, 3, 6, 10} of a basic antenna element sub-module group, the feature indication information {feature indication information of uniform linear array unit} of the basic antenna element sub-module group, and the feature indication information of the reference antenna element module.

As can be seen, for the uniform linear array unit, a structure obtained after the uniform linear array unit is rotated can be considered to be equivalent to an original structure of the uniform linear array unit. Therefore, the rotation indication information of the uniform linear array unit is not configured. Certainly, it is feasible if the structure obtained after the uniform linear array unit is rotated is not considered to be equivalent to the original structure of the uniform linear array unit, and the corresponding rotation indication information is accordingly set (such as setting the rotation indication information {0}).

The feature indication information corresponding to the uniform linear array unit at least includes: the shape of the basic antenna element sub-module is the uniform linear array; the number of the oscillators of the basic antenna element sub-module is 4; the spatial distribution of the oscillators of the basic antenna element sub-module is that, in a same polarization direction, the number of the oscillators in a horizontal direction is 2, the number of the oscillator in a vertical direction is 1, and the oscillators in the horizontal direction are distributed at equal intervals; the polarization direction of the oscillators of the basic antenna element sub-module is dual polarization; the reference point of the basic antenna element sub-module is a position of the leftmost minimum antenna element sub-module of the uniform linear array unit; the minimum antenna element sub-module indexes of the basic antenna element sub-module are 0 and 1; the antenna port indexes of the basic antenna element sub-module are 0 to 3; and the indexing mode of the basic antenna element sub-module includes an association relationship between the minimum antenna element sub-module indexes of the basic antenna element sub-module and the antenna port indexes of the basic antenna element sub-module.

The feature indication information of the reference antenna element module at least includes: the shape of the reference antenna element module is the uniform rectangular area array; the number of the oscillators of the reference antenna element module is 24; the spatial distribution of the oscillators of the reference antenna element module is that, in a same polarization direction, the number of the oscillators in a horizontal direction is 6, the number of the oscillators in a vertical direction is 2, and the oscillators in the horizontal direction and the oscillators in the vertical direction are distributed at equal intervals; the polarization direction of the oscillators of the reference antenna element module is dual polarization; the reference point of the reference antenna element module is a position of a minimum antenna element sub-module at a lower left corner of a uniform rectangular area array unit; the minimum antenna element sub-module indexes of the reference antenna element module are 0 to 11; the antenna port indexes of the reference antenna element module are 0 to 23; and the indexing mode of the reference antenna element module includes an association relationship f(i)=(i,i+12) between the minimum antenna element sub-module indexes of the reference antenna element module and the antenna port indexes of the reference antenna element module, where i is an integer from 0 to 11 and denotes a minimum antenna element sub-module index of the reference antenna element module, and f(i) denotes an antenna port index of the reference antenna element module.

The index identification type is determined as the effective index identification type according to the antenna set configuration information or the high-level signaling.

The reference codebook W0 is a 24*Q complex matrix, where Q is a positive integer, and single-layer transmission is performed when Q=1, and multi-layer transmission is performed when Q > 1.

According to the position indication information of the basic antenna element sub-modules, the feature indication information of the basic antenna element sub-modules, the feature indication information of the reference antenna element module, and the effective index identification type, the effective minimum antenna element sub-module indexes of the reference antenna element module are determined to be {0, 1, 3, 4, 6, 7, 10, 11}.

Or, according to the position indication information of the basic antenna element sub-module group, the feature indication information of the basic antenna element sub-module group, the feature indication information of the reference antenna element module, and the effective index identification type, the effective minimum antenna element sub-module indexes of the reference antenna element module are determined to be {0, 1, 3, 4, 6, 7, 10, 11}.

According to the effective minimum antenna element sub-module indexes of the reference antenna element module and the indexing mode of the reference antenna element module, the effective antenna port indexes of the reference antenna element module are determined to be {0, 1, 3, 4, 6, 7, 10, 11, 12, 13, 15, 16, 18, 19, 22, 23}.

According to the effective antenna port indexes of the reference antenna element module, the effective row indexes of the reference codebook are determined to be {1, 2, 4, 5, 7, 8, 11, 12, 13, 14, 16, 17, 19, 20, 23, 24}.

According to the effective row indexes of the reference codebook and all the row indexes of the reference codebook, the ineffective row indexes of the reference codebook are determined to be {3, 6, 9, 10, 15, 18, 21, 22}.

The feedback codebook W1 is determined according to the reference codebook W0 and the ineffective row indexes of the reference codebook. Specifically, elements of the third, sixth, ninth, tenth, fifteenth, eighteenth, twenty-first and twenty-second rows of the reference codebook W0 are set to zero to obtain the feedback codebook W1.

Channel information feedback is performed using the feedback codebook W1.

### Example Three

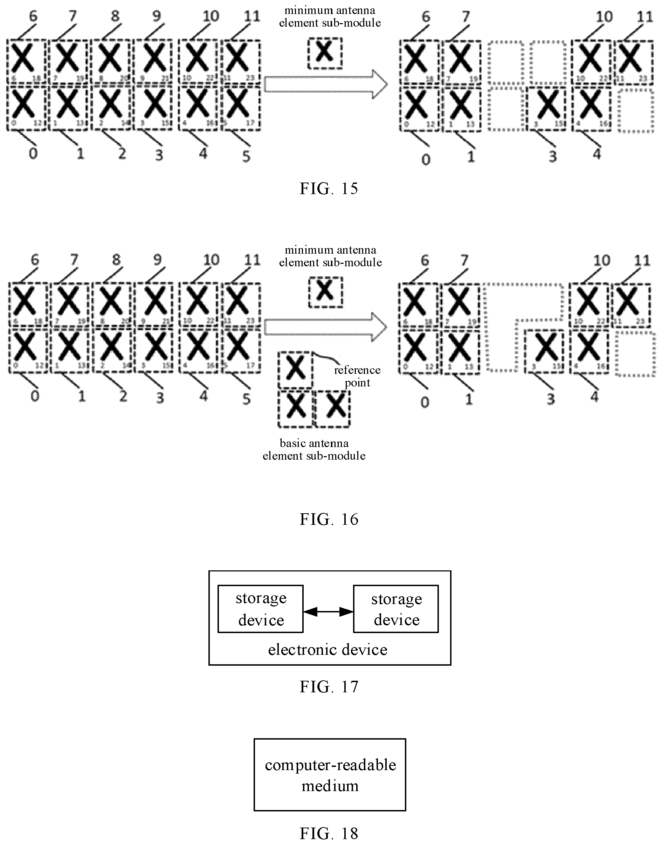

FIG. 15 shows configuration of an antenna element module.

The antenna set configuration information at least includes the position indication information {0, 1, 3, 4, 6, 7, 10, 11} of eight basic antenna element sub-modules and the feature indication information of the reference antenna element module. Each basic antenna element sub-module is formed by one minimum antenna element sub-module.

Or, in another implementation, the form of the basic antenna element sub-module group may be adopted, that is, the antenna set configuration information at least includes the position indication information {0, 1, 3, 4, 6, 7, 10, 11} of a basic antenna element sub-module group and the feature indication information of the reference antenna element module. Each basic antenna element sub-module in the basic antenna element sub-module group is formed by one minimum antenna element sub-module.

As can be seen, the basic antenna element sub-module includes merely one minimum antenna element sub-module, so that the basic antenna element sub-module has neither rotation indication information nor relevant information of a reference point.

The feature indication information of the reference antenna element module at least includes: the shape of the reference antenna element module is the uniform rectangular area array; the number of the oscillators of the reference antenna element module is 24; the spatial distribution of the oscillators of the reference antenna element module is that, in a same polarization direction, the number of the oscillators in a horizontal direction is 6, the number of the oscillators in a vertical direction is 2, and the oscillators in the horizontal direction and the oscillators in the vertical direction are distributed at equal intervals; the polarization direction of the oscillators of the reference antenna element module is dual polarization; the reference point of the reference antenna element module is a position of a minimum antenna element sub-module at a lower left corner of a uniform rectangular area array unit; the minimum antenna element sub-module indexes of the reference antenna element module are 0 to 11; the antenna port indexes of the reference antenna element module are 0 to 23; and the indexing mode of the reference antenna element module includes an association relationship f(i)=(i,i+12) between the minimum antenna element sub-module indexes of the reference antenna element module and the antenna port indexes of the reference antenna element module, where i is an integer from 0 to 11 and denotes a minimum antenna element sub-module index of the reference antenna element module, and f(i) denotes an antenna port index of the reference antenna element module.

The index identification type is determined as the effective index identification type according to the antenna set configuration information or the high-level signaling.

The reference codebook W0 is a 24*Q complex matrix, where Q is a positive integer, and single-layer transmission is performed when Q=1 , and multi-layer transmission is performed when Q > 1.

According to the position indication information of the basic antenna element sub-modules (or the position indication information of the basic antenna element sub-module group), the feature indication information of the reference antenna element module, and the effective index identification type, the effective minimum antenna element sub-module indexes of the reference antenna element module are determined to be {0, 1, 3, 4, 6, 7, 10, 11}.

According to the effective minimum antenna element sub-module indexes of the reference antenna element module and the indexing mode of the reference antenna element module, the effective antenna port indexes of the reference antenna element module are determined to be {0, 1, 3, 4, 6, 7, 10, 11, 12, 13, 15, 16, 18, 19, 22, 23}.

According to the effective antenna port indexes of the reference antenna element module, the effective row indexes of the reference codebook are determined to be {1, 2, 4, 5, 7, 8, 11, 12, 13, 14, 16, 17, 19, 20, 23, 24}.

According to the effective row indexes of the reference codebook and all the row indexes of the reference codebook, the ineffective row indexes of the reference codebook are determined to be {3, 6, 9, 10, 15, 18, 21, 22}.

The feedback codebook W1 is determined according to the reference codebook W0 and the ineffective row indexes of the reference codebook. Specifically, elements of the third, sixth, ninth, tenth, fifteenth, eighteenth, twenty-first and twenty-second rows of the reference codebook W0 are set to zero to obtain the feedback codebook W1.

Channel information feedback is performed using the feedback codebook W1.

### Example Four

Reference is still made to FIG. 15 for configuration of an antenna element module.

For the configuration of the antenna element module the same as that illustrated by Example Three, in a case where the shape of the basic antenna element sub-module (the basic antenna element sub-module also includes merely one minimum antenna element sub-module) is also the same as that illustrated by Example Three, the antenna set configuration information may at least include the position indication information {2, 5, 8, 9} of four basic antenna element sub-modules and the feature indication information of the reference antenna element module. Each basic antenna element sub-module is formed by one minimum antenna element sub-module.

Or, in another implementation, the form of the basic antenna element sub-module group may be adopted, that is, the antenna set configuration information at least includes the position indication information {2, 5, 8, 9} of a basic antenna element sub-module group and the feature indication information of the reference antenna element module. Each basic antenna element sub-module in the basic antenna element sub-module group is formed by one minimum antenna element sub-module.

As can be seen, the basic antenna element sub-module includes merely one minimum antenna element sub-module, so that the basic antenna element sub-module has neither rotation indication information nor relevant information of a reference point.

The feature indication information of the reference antenna element module at least includes: the shape of the reference antenna element module is the uniform rectangular area array; the number of the oscillators of the reference antenna element module is 24; the spatial distribution of the oscillators of the reference antenna element module is that, in a same polarization direction, the number of the oscillators in a horizontal direction is 6, the number of the oscillators in a vertical direction is 2, and the oscillators in the horizontal direction and the oscillators in the vertical direction are distributed at equal intervals; the polarization direction of the oscillators of the reference antenna element module is dual polarization; the reference point of the reference antenna element module is a position of a minimum antenna element sub-module at a lower left corner of a uniform rectangular area array unit; the minimum antenna element sub-module indexes of the reference antenna element module are 0 to 11; the antenna port indexes of the reference antenna element module are 0 to 23; and the indexing mode of the reference antenna element module includes an association relationship f(i)=(i,i+12) between the minimum antenna element sub-module indexes of the reference antenna element module and the antenna port indexes of the reference antenna element module, where i is an integer from 0 to 11 and denotes a minimum antenna element sub-module index of the reference antenna element module, and f(i) denotes an antenna port index of the reference antenna element module.

The index identification type is determined as the ineffective index identification type according to the antenna set configuration information or the high-level signaling.

The reference codebook W0 is a 24*Q complex matrix, where Q is a positive integer, and single-layer transmission is performed when Q=1, and multi-layer transmission is performed when Q > 1.

According to the position indication information of the minimum antenna element sub-modules (or the position indication information of the minimum antenna element sub-module group), the feature indication information of the reference antenna element module, and the ineffective index identification type, the ineffective minimum antenna element sub-module indexes of the reference antenna element module are determined to be {2, 5, 8, 9}.

According to the ineffective minimum antenna element sub-module indexes of the reference antenna element module and the indexing mode of the reference antenna element module, the ineffective antenna port indexes of the reference antenna element module are determined to be {3, 6, 9, 10, 15, 18, 21, 22}.

Thus, according to the ineffective antenna port indexes of the reference antenna element module, the ineffective row indexes of the reference codebook are determined to be {3, 6, 9, 10, 15, 18, 21, 22}.

The feedback codebook W1 is determined according to the reference codebook W0 and the ineffective row indexes of the reference codebook. Specifically, elements of the third, sixth, ninth, tenth, fifteenth, eighteenth, twenty-first and twenty-second rows of the reference codebook W0 are set to zero to obtain the feedback codebook W1.

Channel information feedback is performed using the feedback codebook W1.

### Example Five

FIG. 16 shows configuration of an antenna element module.

The antenna set configuration information at least includes the position indication information {9, 5} of two basic antenna element sub-modules, the feature indication information of an L-shaped unit, the rotation indication information {90} of the L-shaped unit, and the feature indication information of the reference antenna element module. One of the two basic antenna element sub-modules is the L-shaped unit, and the other basic antenna element sub-module is formed by one minimum antenna element sub-module.

The feature indication information of the L-shaped unit at least includes: the shape of the basic antenna element sub-module is the L shape; the number of the oscillators of the basic antenna element sub-module is 6; the spatial distribution of the oscillators of the basic antenna element sub-module is that the oscillators in a same polarization direction are distributed in an L shape; the polarization direction of the oscillators of the basic antenna element sub-module is dual polarization; the reference point of the basic antenna element sub-module is a position of the uppermost minimum antenna element sub-module of the L-shaped unit; the minimum antenna element sub-module indexes of the basic antenna element sub-module are 0 to 2; the antenna port indexes of the basic antenna element sub-module are 0 to 5; and the indexing mode of the basic antenna element sub-module includes an association relationship between the minimum antenna element sub-module indexes of the basic antenna element sub-module and the antenna port indexes of the basic antenna element sub-module.

The feature indication information of the reference antenna element module at least includes: the shape of the reference antenna element module is the uniform rectangular area array; the number of the oscillators of the reference antenna element module is 24; the spatial distribution of the oscillators of the reference antenna element module is that, in a same polarization direction, the number of the oscillators in a horizontal direction is 6, the number of the oscillators in a vertical direction is 2, and the oscillators in the horizontal direction and the oscillators in the vertical direction are distributed at equal intervals; the polarization direction of the oscillators of the reference antenna element module is dual polarization; the reference point of the reference antenna element module is a position of a minimum antenna element sub-module at a lower left corner of the uniform rectangular area array unit; the minimum antenna element sub-module indexes of the reference antenna element module are 0 to 11; the antenna port indexes of the reference antenna element module are 0 to 23; and the indexing mode of the reference antenna element module includes an association relationship f(i)=(i,i+12) between the minimum antenna element sub-module indexes of the reference antenna element module and the antenna port indexes of the reference antenna element module, where i is an integer from 0 to 11 and denotes a minimum antenna element sub-module index of the reference antenna element module, and f(i) denotes an antenna port index of the reference antenna element module.

As can be seen, for the basic antenna element sub-module which includes merely one minimum antenna element sub-module, the basic antenna element sub-module has neither rotation indication information nor relevant information of a reference point.

The index identification type is determined as the ineffective index identification type according to the antenna set configuration information or the high-level signaling.

The reference codebook W0 is a 24*Q complex matrix, where Q is a positive integer, and single-layer transmission is performed when Q=1, and multi-layer transmission is performed when Q > 1.

According to the position indication information of the basic antenna element sub-modules, the rotation indication information of the basic antenna element sub-module, the feature indication information of the reference antenna element module, and the ineffective index identification type, the ineffective minimum antenna element sub-module indexes of the reference antenna element module are determined to be {2, 5, 8, 9}.

According to the ineffective minimum antenna element sub-module indexes of the reference antenna element module and the indexing mode of the reference antenna element module, the ineffective antenna port indexes of the reference antenna element module are determined to be {3, 6, 9, 10, 15, 18, 21, 22}.

According to the ineffective antenna port indexes of the reference antenna element module, the ineffective row indexes of the reference codebook are determined to be {3, 6, 9, 10, 15, 18, 21, 22}.

The feedback codebook W1 is determined according to the reference codebook W0 and the ineffective row indexes of the reference codebook. Specifically, elements of the third, sixth, ninth, tenth, fifteenth, eighteenth, twenty-first and twenty-second rows of the reference codebook W0 are set to zero to obtain the feedback codebook W1.

Channel information feedback is performed using the feedback codebook W1.

In a second aspect, referring to FIG. 17, an embodiment of the present disclosure provides an electronic device, including: one or more storage devices and one or more processors, the one or more storage devices store a computer program executable by the one or more processors, and when the computer program is executed by the one or more processors, the channel information feedback method according to any one of the embodiments of the present disclosure is implemented.

In a third aspect, referring to FIG. 18, an embodiment of the present disclosure provides a computer-readable medium having stored thereon a computer program which, when executed by a processor, implements the channel information feedback method according to any one of the embodiments of the present disclosure.

In the embodiments of the present disclosure, the processor is a device having data processing capability, and includes, but is not limited to, a central processing unit (CPU); and the storage device is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and an input/output (I/O) interface (read/write interface) is connected between the processor and the storage device, is capable of enabling information interaction between the storage device and the processor, and includes, but is not limited to, a data bus (Bus).

It should be understood by those of ordinary skill in the art that the functional modules/units in all or some of the operations, the systems, and the devices in the methods disclosed above may be implemented as software, firmware, hardware, or suitable combinations thereof.

If implemented as hardware, the division between the functional modules/units stated above is not necessarily corresponding to the division of physical components; for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR SDRAM, etc.), an ROM, an EEPROM, a FLASH or other magnetic disks; a Compact Disc Read Only Memory (CD-ROM), a Digital Versatile Disc (DVD) or other optical discs; a magnetic cassette, a magnetic tape, a magnetic disk or other magnetic storage devices; and any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A channel information feedback method, comprising:
determining antenna set configuration information, wherein the antenna set configuration information represents a configuration situation of an antenna set formed by minimum antenna element sub-modules;
determining a feedback codebook according to the antenna set configuration information; and
performing channel information feedback using the feedback codebook.

2. The method of claim 1, wherein the antenna set configuration information comprises at least one of:
feature indication information of K basic antenna element sub-modules;
position indication information of the K basic antenna element sub-modules;
rotation indication information of the K basic antenna element sub-modules; or
feature indication information of a reference antenna element module,
wherein K is a positive integer, the basic antenna element sub-modules and the reference antenna element module are all formed by the minimum antenna element sub-modules, the reference antenna element module represents a maximum setting range of the minimum antenna element sub-modules, and the basic antenna element sub-module represents one or more minimum antenna element sub-modules that form a predetermined shape.

3. The method of claim 2, wherein the feature indication information of the basic antenna element sub-module comprises at least one of:
a shape of the basic antenna element sub-module; a number of oscillators of the basic antenna element sub-module; spatial distribution of the oscillators of the basic antenna element sub-module; a polarization direction of the oscillators of the basic antenna element sub-module; a reference point of the basic antenna element sub-module; minimum antenna element sub-module indexes of the basic antenna element sub-module; antenna port indexes of the basic antenna element sub-module; or an indexing mode of the basic antenna element sub-module, and
the reference point of the basic antenna element sub-module is a position where a specified minimum antenna element sub-module in the basic antenna element sub-module is located.

4. The method of claim 2, wherein
the position indication information of the basic antenna element sub-module comprises a minimum antenna element sub-module index of a position where a reference point of the basic antenna element sub-module is located in the reference antenna element module, and the reference point of the basic antenna element sub-module is a position where a specified minimum antenna element sub-module in the basic antenna element sub-module is located, and
the rotation indication information of the basic antenna element sub-module comprises an angle of rotation of the basic antenna element sub-module around the reference point of the basic antenna element sub-module.

5. The method of claim 2, wherein the feature indication information of the reference antenna element module comprises at least one of:
a shape of the reference antenna element module; a number of oscillators of the reference antenna element module; spatial distribution of the oscillators of the reference antenna element module; a polarization direction of the oscillators of the reference antenna element module; a reference point of the reference antenna element module; minimum antenna element sub-module indexes of the reference antenna element module; antenna port indexes of the reference antenna element module; or an indexing mode of the reference antenna element module, and
the reference point of the reference antenna element module is a position where a specified minimum antenna element sub-module in the reference antenna element module is located.

6. The method of claim 2, wherein
if the feature indication information of any basic antenna element sub-module indicates that a shape of the basic antenna element sub-module is a uniform rectangular area array and/or that a number of the minimum antenna element sub-module included in the basic antenna element sub-module is 1, the basic antenna element sub-module has no rotation indication information.

7. The method of claim 2, wherein
if the feature indication information of any basic antenna element sub-module indicates that a number of the minimum antenna element sub-module included in the basic antenna element sub-module is 1, the feature indication information of the basic antenna element sub-module does not comprises the reference point.

8. The method of claim 2, wherein the antenna set configuration information further comprises:
grouping information of n basic antenna element sub-module groups, wherein the grouping information of the basic antenna element sub-module groups represents the basic antenna element sub-modules included in the basic antenna element sub-module groups, each of the basic antenna element sub-module groups comprises a plurality of basic antenna element sub-modules having the same feature indication information, the n basic antenna element sub-module groups comprises K0 basic antenna element sub-modules in total, and K0 ≤ K; and
configuration information of the n basic antenna element sub-module groups, wherein the configuration information of the basic antenna element sub-module group comprises at least one of:
feature indication information of the basic antenna element sub-module group;
position indication information of the basic antenna element sub-module group; or
rotation indication information of the basic antenna element sub-module group.

9. The method of claim 8, wherein
the feature indication information of the basic antenna element sub-module group comprises the common feature indication information of all the basic antenna element sub-modules in the basic antenna element sub-module group,
the position indication information of the basic antenna element sub-module group comprises a minimum antenna element sub-module index of a position where a reference point of each basic antenna element sub-module of the basic antenna element sub-module group is located in the reference antenna element module, and
the rotation indication information of the basic antenna element sub-module group comprises an angle of rotation of each basic antenna element sub-module in the basic antenna element sub-module group around the reference point of the basic antenna element sub-module.

10. The method of claim 8, wherein
if the feature indication information of any basic antenna element sub-module group indicates that shapes of the basic antenna element sub-modules in the basic antenna element sub-module group are uniform rectangular area arrays and/or that a number of the minimum antenna element sub-module included in each basic antenna element sub-module of the basic antenna element sub-module group is 1, the basic antenna element sub-module group has no rotation indication information.

11. The method of claim 8, wherein
if the feature indication information of any basic antenna element sub-module group indicates that a number of the minimum antenna element sub-module included in each basic antenna element sub-module of the basic antenna element sub-module group is 1, the feature indication information of the basic antenna element sub-module group does not comprise the reference point.

12. The method of claim 8, wherein determining the feedback codebook according to the antenna set configuration information comprises:
determining an effective row index or an ineffective row index of a reference codebook, wherein the reference codebook is a codebook associated with the reference antenna element module; and
determining the feedback codebook according to the effective row index or the ineffective row index of the reference codebook and the reference codebook, and
determining the effective row index or the ineffective row index of the reference codebook comprises any one of:
determining the effective row index of the reference codebook according to the antenna set configuration information and index identification information;
determining the ineffective row index of the reference codebook according to the antenna set configuration information and the index identification information;
determining the effective row index of the reference codebook according to the antenna set configuration information, an index identification type, and the index identification information; and
determining the ineffective row index of the reference codebook according to the antenna set configuration information, the index identification type, and the index identification information.

13. The method of claim 12, wherein
each of the reference codebook and the feedback codebook is a P*Q complex matrix, wherein P is a number of antenna ports of the reference antenna element module, and Q is a number of transmission layers.

14. The method of claim 12, wherein
the index identification information is all row indexes of the reference codebook, and
the index identification type comprises an effective index identification type and an ineffective index identification type, and the index identification type is determined according to the antenna set configuration information or is notified by high-level signaling.

15. The method of claim 12, wherein determining the effective row index of the reference codebook according to the antenna set configuration information and the index identification information comprises:
determining an effective minimum antenna element sub-module index of the reference antenna element module;
determining an effective antenna port index of the reference antenna element module according to the effective minimum antenna element sub-module index of the reference antenna element module, an indexing mode of the reference antenna element module, and the index identification information; and
determining the effective row index of the reference codebook according to the effective antenna port index of the reference antenna element module, and
determining the effective minimum antenna element sub-module index of the reference antenna element module comprises any one of:
determining the effective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, and the index identification information;
determining the effective minimum antenna element sub-module index of the reference antenna element module according to the position indication information of the basic antenna element sub-modules, the feature indication information of the basic antenna element sub-modules, the feature indication information of the reference antenna element module, and the index identification information;
determining the effective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, and the index identification information; and
determining the effective minimum antenna element sub-module index of the reference antenna element module according to the position indication information of the basic antenna element sub-module groups, the feature indication information of the basic antenna element sub-module groups, the feature indication information of the reference antenna element module, and the index identification information.

16. The method of claim 12, wherein determining the ineffective row index of the reference codebook according to the antenna set configuration information and the index identification information comprises:
determining an ineffective minimum antenna element sub-module index of the reference antenna element module;
determining an ineffective antenna port index of the reference antenna element module according to the ineffective minimum antenna element sub-module index of the reference antenna element module, an indexing mode of the reference antenna element module, and the index identification information; and
determining the ineffective row index of the reference codebook according to the ineffective antenna port index of the reference antenna element module, and
determining the ineffective minimum antenna element sub-module index of the reference antenna element module comprises any one of:
determining the ineffective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, and the index identification information;
determining the ineffective minimum antenna element sub-module index of the reference antenna element module according to the position indication information of the basic antenna element sub-modules, the feature indication information of the basic antenna element sub-modules, the feature indication information of the reference antenna element module, and the index identification information;
determining the ineffective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, and the index identification information; and
determining the ineffective minimum antenna element sub-module index of the reference antenna element module according to the position indication information of the basic antenna element sub-module groups, the feature indication information of the basic antenna element sub-module groups, the feature indication information of the reference antenna element module, and the index identification information.

17. The method of claim 12, wherein determining the effective row index of the reference codebook according to the antenna set configuration information, the index identification type, and the index identification information comprises:
determining an effective minimum antenna element sub-module index of the reference antenna element module;
determining an effective antenna port index of the reference antenna element module according to the effective minimum antenna element sub-module index of the reference antenna element module, an indexing mode of the reference antenna element module, and the index identification information; and
determining the effective row index of the reference codebook according to the effective antenna port index of the reference antenna element module, and
determining the effective minimum antenna element sub-module index of the reference antenna element module comprises any one of:
determining the effective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, the index identification information, and an effective index identification type;
determining the effective minimum antenna element sub-module index of the reference antenna element module according to the position indication information of the basic antenna element sub-modules, the feature indication information of the basic antenna element sub-modules, the feature indication information of the reference antenna element module, the index identification information, and the effective index identification type;
determining the effective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, the index identification information, and the effective index identification type; and
determining the effective minimum antenna element sub-module index of the reference antenna element module according to the position indication information of the basic antenna element sub-module groups, the feature indication information of the basic antenna element sub-module groups, the feature indication information of the reference antenna element module, the index identification information, and the effective index identification type.

18. The method of claim 12, wherein determining the ineffective row index of the reference codebook according to the antenna set configuration information, the index identification type, and the index identification information comprises:
determining an ineffective minimum antenna element sub-module index of the reference antenna element module;
determining an ineffective antenna port index of the reference antenna element module according to the ineffective minimum antenna element sub-module index of the reference antenna element module, an indexing mode of the reference antenna element module, and the index identification information; and
determining the ineffective row index of the reference codebook according to the ineffective antenna port index of the reference antenna element module, and
determining the ineffective minimum antenna element sub-module index of the reference antenna element module comprises any one of:
determining the ineffective minimum antenna element sub-module index of the reference antenna element module according to the position indication information of the basic antenna element sub-modules, the rotation indication information of the basic antenna element sub-modules, the feature indication information of the basic antenna element sub-modules, the feature indication information of the reference antenna element module, the index identification information, and an ineffective index identification type;
determining the ineffective minimum antenna element sub-module index of the reference antenna element module according to the position indication information of the basic antenna element sub-modules, the feature indication information of the basic antenna element sub-modules, the feature indication information of the reference antenna element module, the index identification information, and the ineffective index identification type;
determining the ineffective minimum antenna element sub-module index of the reference antenna element module according to the position indication information of the basic antenna element sub-module groups, the rotation indication information of the basic antenna element sub-module groups, the feature indication information of the basic antenna element sub-module groups, the feature indication information of the reference antenna element module, the index identification information, and the ineffective index identification type; and
determining the ineffective minimum antenna element sub-module index of the reference antenna element module according to the position indication information of the basic antenna element sub-module groups, the feature indication information of the basic antenna element sub-module groups, the feature indication information of the reference antenna element module, the index identification information, and the ineffective index identification type.

19. The method of claim 12, wherein determining the feedback codebook according to the effective row index of the reference codebook and the reference codebook comprises:
determining the ineffective row index of the reference codebook according to the effective row index of the reference codebook and the index identification information; and
according to the determined ineffective row index of the reference codebook and the reference codebook, setting a row in a reference codebook matrix which is corresponding to the ineffective row index of the reference codebook to zero to obtain the feedback codebook.

20. The method of claim 12, wherein determining the feedback codebook according to the ineffective row index of the reference codebook and the reference codebook comprises:
according to the ineffective row index of the reference codebook and the reference codebook, setting a row in a reference codebook matrix which is corresponding to the ineffective row index of the reference codebook to zero to obtain the feedback codebook.

21. The method of claim 1, wherein the method is performed by any one of an Access Point (AP), a User Equipment (UE), a Central Processing Unit (CPU), and a Mobile Edge Computing (MEC) unit.

22. An electronic device, comprising one or more storage devices and one or more processors, the one or more storage devices store a computer program executable by the one or more processors, and when the computer program is executed by the one or more processors, the channel information feedback method of any one of claims 1 to 21 is implemented.

23. A computer-readable medium having stored thereon a computer program which, when executed by a processor, implements the channel information feedback method of any one of claims 1 to 21.
